(19) **Europäisches Patentamt**

**European Patent Office**

**Office européen des brevets**

(11) **EP 0 891 556 B1**

(12) **EUROPEAN PATENT SPECIFICATION**

(45) Date of publication and mention
of the grant of the patent:
**31.07.2002 Bulletin 2002/31**

(51) Int Cl.7: **G01P 15/08**

(86) International application number:
**PCT/IL97/00114**

(21) Application number: **97908479.5**

(22) Date of filing: **31.03.1997**

(87) International publication number:
**WO 97/37232 (09.10.1997 Gazette 1997/43)**

(54) **METHOD AND APPARATUS FOR MEASURING ACCELERATION**

VERFAHREN UND VORRICHTUNG ZUR BESCHLEUNIGUNGSMESSUNG

PROCEDE DE MESURE DE L'ACCELERATION ET APPAREIL CORRESPONDANT

(84) Designated Contracting States:
**BE DE ES FR GB IT NL SE**

(30) Priority: **01.04.1996 IL 11776796**

(43) Date of publication of application:
**20.01.1999 Bulletin 1999/03**

(73) Proprietors:
• **Ariav, Aryeh**
  **D.N. Hof Ashkelon (IL)**
• **Ravitch, Vladimir**
  **78505 Ashkelon (IL)**

(72) Inventors:
• **Ariav, Aryeh**
  **D.N. Hof Ashkelon (IL)**
• **Ravitch, Vladimir**
  **78505 Ashkelon (IL)**

(74) Representative: **Nachshen, Neil Jacob et al**
**D Young & Co**
**21 New Fetter Lane**
**London EC4A 1DA (GB)**

(56) References cited:
AT-A- 384 110        CH-A- 680 395
DE-A- 3 234 733      FR-A- 1 263 358
FR-A- 2 309 873

## Description

### FIELD OF THE INVENTION

The present invention relates to a method and apparatus for measuring acceleration of a moving object.

### BACKGROUND OF THE INVENTION

Acceleration (rate of change of velocity) is generally measured indirectly, by measuring the force exerted by, or restraints that are placed on, a reference mass to hold its position fixed in an accelerating body. Acceleration is computed using the relationship between restraint force and acceleration given by Newton's Second Law of Motion: the force is equal to the product of the mass and acceleration. Therefore, the precision by which acceleration can be determined is directly related to the precision by which force and mass can be measured.

Further AT-B-384 110 discloses a sonic tachometer which has an audio transmitter centrally located between two receivers on a moving object. The system processor adjusts the frequency of an audio signal from the transmitter to null the phase difference between the signals detected at the two receivers, and then counts the number of wave maxima by which the signal arriving at the forward receiver runs ahead of the signal arriving at the other receiver.

### SUMMARY OF THE INVENTION

An object of the present invention is to provide a novel method and apparatus for measuring acceleration, which method and apparatus are capable of very high precision and which are not subject to the above limitations.

According to one aspect of the present invention, there is provided a method of measuring acceleration of a moving object, comprising:

(a) applying to the moving object, so as to be carried thereby and to move therewith, a body capable of transmitting pulses of energy;
(b) transmitting a pulse of said energy in a forward direction, from a first location on the body in a second location on the body at a known distance from the first location;
(c) detecting the transmitted pulse at the second location;
(d) measuring transit time of the pulse from the first location to the second location; and
(e) utilizing the measured transit time, together with the known distance between the first and second locations, for determining acceleration of the body and thereby of the moving object.

It will thus be seen that the novel method is not based on the conventional approach for measuring acceleration by measuring a force, but rather is based on measuring the transit time of an energy pulse. The basic mechanism of operation can be considered to be analogous to two persons at opposite ends of a moving train car spaced by a distance $S$ throwing a ball between them. As long as there is no acceleration, i.e. the car is moving at constant velocity, the transit time $T$ of the ball from one end to the opposite end will be constant. However, when the velocity changes, i.e. the train accelerates or decelerates, a receiver of the ball will appear to be farther (upon acceleration) or closer (upon deceleration) from a thrower of the ball by "virtual distance change" $\delta s$, which varies in magnitude and sign according to the acceleration. Thus, when the acceleration is positive in the direction in which the ball is thrown, the transit time $T$ will be increased by $\delta t$ corresponding to the "virtual distance change" $\delta s$, and, when it is negative, it will be decreased by $\delta t$.

While the above method theoretically may be implemented by the use of electromagnetic pulses, it is particularly applicable when using the lower-velocity sonic pulses, and is therefore described below with respect to sonic pulses. In the above analogy, therefore, the ball corresponds to the sonic pulse. Although the transmission of a sonic pulse through a medium does not involve movement of mass particles through the medium in the same manner as in the ball analogy, it does involve movement of the energy of mass particles through the medium. Thus, as shown by the classical demonstration of Newton's Third Law of Motion ("to every action there is always an equal and opposite reaction") utilizing a line of suspended spherical balls in contact with each other, holding the first ball at one end of the line away from the next ball in the line, and releasing it to impact the next ball in the line, will produce an equal movement of the last ball at the opposite end of the line. The transmission of this energy from the first ball to the last ball is by a compressional, longitudinal (i.e. sonic) pulse. When the pulse is of electromagnetic energy, there is an analogous transmission of the energy through the body, although of course at a much higher velocity than the transmission of a sonic pulse.

As in the ball analogy, therefore, when a body is subjected to acceleration, a pulse transmitted through such a body will experience a transit time $t_B$ when not subjected to acceleration, an increased transit time $t_B+\delta t$ corresponding to the "virtual distance change" (VDC) factor $\delta s$ when subjected to acceleration, and a decreased transit time $t_B-\delta t$ decreased by the VDC factor when subjected to deceleration.

It will thus be seen that this method for measuring acceleration is effected by measuring time, namely the transit times of energy pulses, and not by measuring a force as in the conventional acceleration-measuring techniques. The measurement of time can be done much more precisely, particularly when using high-frequency digital techniques, than measuring force and mass, and therefore it will be seen that the novel method is inherently capable of much higher precision than the conventional acceleration-measuring techniques.

According to further features in the described preferred embodiments, a pulse is also transmitted in the reverse direction, from the second location to the first location, is detected at the first location, and its transit time is measured and also utilized in determining acceleration of the body and thereby of the moving object. As will be described below, the transmission of forward-direction and reverse-direction pulses tends to cancel the pulse velocity factor and also spurious signals such as resulting from changes in temperature, pressure, etc.

According to still further features in the described preferred embodiments, the known distance between the first and second locations is effectively multiplied by transmitting a plurality **N** of forward-direction pulses, and the same plurality **N** of reverse-direction pulses. Each forward-direction pulse is transmitted from the first location upon detection of the preceding forward-direction pulse at the second location, and each reverse-direction pulse is transmitted from the second location upon detection of the preceding reverse-direction pulse at the first location. The total transit times of the **N** forward-direction pulses, and the total transit times of the **N** reverse-direction pulses are measured and utilized, together with the known distance between the first and second locations multiplied by **N**, for determining acceleration of the body and thereby of the moving object.

The foregoing features, which enable the distance between the two locations to be effectively multiplied without limitation, enable even extremely low accelerations to be precisely measured.

According to further features in one of the described preferred embodiments, the pulse transmitting body is a cylindrically-shaped tube filled with a gaseous medium, preferably air, and sealed at both ends. The first location is at one end of the tube, and the second location is at the opposite end of the tube. The acceleration to be measured is thus a linear acceleration.

According to another preferred embodiment, the pulse transmitting body is a bent tube in the form of a ring, or spiral with connected ends, having first and second spaced pipes tangentially projecting from the ring. The first location is in the first pipe, and the second location is in the second pipe. The tube is filled with a fluid medium. The acceleration to be measured is thus an angular acceleration.

The invention also provides apparatus for measuring acceleration in accordance with the above method.

It will be appreciated that after acceleration has been measured, the same method and apparatus may also be used for measuring velocity by integrating the measured acceleration over a time interval, and also for measuring movement or displacement by integrating the measured velocity over the respective time interval.

## BRIEF DESCRIPTION OF THE DRAWINGS

Further features and advantages of the invention will be apparent from the description below. The invention is herein described, by way of example only, with reference to the accompanying drawings, wherein:

**Fig. 1** is a block diagram illustrating the principal components of an apparatus for measuring acceleration in accordance with one preferred embodiment of the present invention;
**Fig. 2** is a flow chart illustrating the main steps of operation of the apparatus of Fig. 1; and
**Fig. 3** is a schematic illustration of a body capable of transmitting sonic pulses according to another preferred embodiment of the invention;

## DETAILED DESCRIPTION OF THE PREFERRED EMBODIMENTS

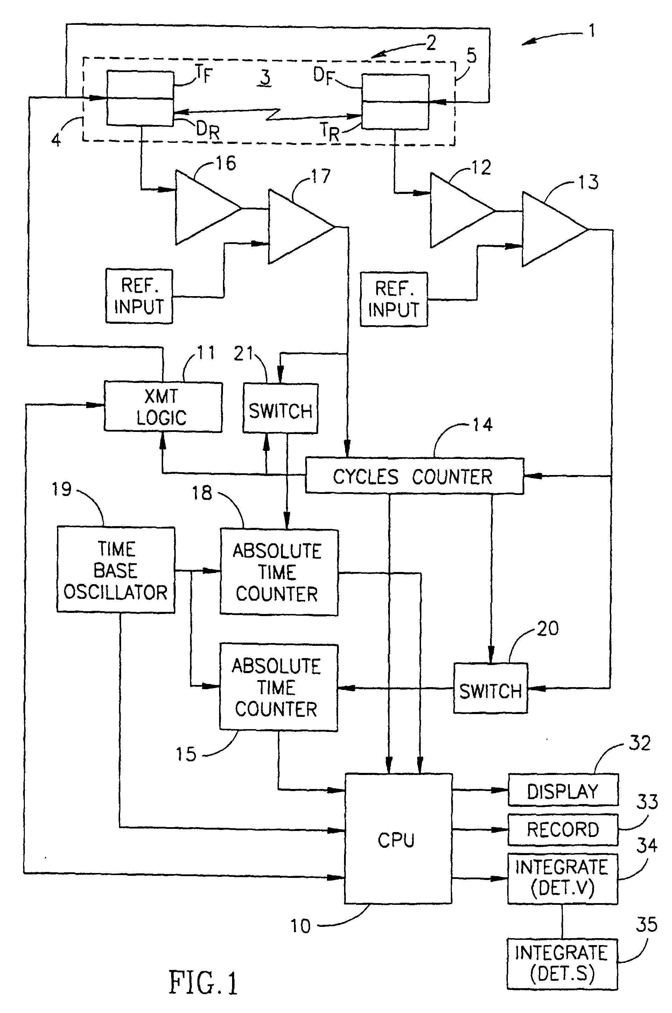

Referring to Fig. 1, there is illustrated an apparatus, generally designated 1 which includes a body, generally at 2, capable of transmitting sonic pulses. In the present example, body 2 is in the form of a cylindrically-shaped tube. The tube is sealed at both its ends 4 and 5, and its interior 3 is filled with a gaseous medium, preferably air. End 4 of tube 2 includes a transmitter $T_F$ for transmitting forward-direction sonic pulses from end 4 to end 5 of the tube, and the latter end of the tube includes a sonic detector $D_F$ for receiving said forward-direction pulses. End 5 of tube 2 also includes a transmitter $T_R$ for transmitting reverse-direction sonic pulses from end 5 towards end 4 of the tube, and the latter end of the tube includes a detector $D_R$ for receiving the reverse-direction sonic pulses.

As will be described more particularly below, the sealed tube 2 is applied to and carried by a moving object, which is not specifically shown and which linear acceleration **a** is to be measured. The apparatus 1 directly measures the acceleration experienced by the sealed tube 2, and thereby also the acceleration of the moving object carrying the sealed tube 2. This measurement of acceleration is effected by transmitting forward-direction pulses from transmitter $T_F$ to detector $D_F$ at the opposite ends of tube 2, and also for transmitting reverse-direction pulses from transmitter $T_R$ to detector $D_R$, and measuring transit times of such forward-direction and reverse-direction pulses. The distance between the transmitters and detectors at the opposite ends of tube 2 is known with precision such that, as will be described more particularly below, the measured transit times, and the known distance between the transmitters and detectors at the opposite ends of tube 2, enable **a** precise determination to be made of the acceleration of the tube 2, and thereby of the moving object carrying this tube.

As illustrated in Fig. 1, the apparatus 1 further includes a processor, generally designated 10, which is connected via a transmitter logic circuit 11 to the forward-direction transmitter $T_F$ in end 4 of tube 2, to cause the latter transmitter to transmit forward-direction sonic pulses from end 4 of the tube towards the opposite end 5. Processor 10 is also connected via transmitter logic circuit 11 to the reverse-direction transmitter $T_R$ at end 5 of the tube causing that transmitter to transmit reverse-direction sonic pulses from end 5 towards end 4 of the tube 2. The forward-direction pulses detected by the detector $D_F$ are amplified in an amplifier 12, thresholded in a comparator 13, fed to a cycles counter 14, and also fed to an absolute time counter 15 through a switch 20. Similarly, the reverse-direction pulses detected by the detector $D_R$ at end 4 of the tube 2 are amplified in an amplifier 16, thresholded in a comparator 17, fed to the cycles counter 14, and also fed to another absolute time counter 18 through a switch 21. All these functional component are well known per se and, therefore, need not be described in detail.

Thus, the transit times of a certain number of the forward-direction sonic pulses from the transmitter $T_F$ to the detector $D_F$ are measured by the absolute time counter 15 which is controlled by a time base oscillator 19. Similarly, the transit times of the same number of the reverse-direction sonic pulses from the transmitter $T_R$ to the detector $D_R$ are measured by the absolute time counter 18 controlled by the same time base oscillator 19. The switches 20 and 21 are controlled by the cycles counter 14 in a manner to be actuated by the cycles counter 14 upon receiving by the latter the last pulse but one detected by the respective detector as described above. Each of the switches 20 and 21, when actuated by the cycles counter 14, operates the respective absolute time counter 15, 18 so as to, upon receipt of the last pulse, stop counting the clock pulses of the oscillator 19 and, thereby, define a transit time period **T**. The counts from counters 14, 15 and 18, as well as the clock pulses from the oscillator 19, are fed to the processor 10, which determines from this information the transit times of the forward-direction pulses from side 4 to side 5 of tube 2, and the reverse-direction pulses from side 5 to side 4 of tube 2. These transit times are used for determining the acceleration of the sealed tube 2 in the following manner.

When the tube 2 is moving at a constant velocity (i.e. at zero acceleration), the transit time **T** of the sonic pulses, both from $T_F$ to $D_F$ and from $T_R$ to $D_R$, will be constant, equal to the length $s_B$ of tube 2 divided by the velocity of sound **v** through the tube 2, i.e. $T=s_B/v$.

When the tube 2 experiences acceleration, for example in the direction of its forward-direction pulses (from side 4 to side 5), distance **S** appears to be increased by the VDC (virtual distance change) factor δ**s.** If the acceleration is positive, the VDC factor will be positive +δ**s.** If the acceleration is negative (deceleration), the VDC factor will be negative -δ**s.**

Thus, the transit time **T** of a sonic pulse in either direction will be the transit time to traverse the sonic body $t_B$ (i.e. the length of the tube 2) plus the time δ**t,** i. e. the transit time for traversing the "virtual distance change" δ**s** which, as described above, corresponds to the magnitude and direction of the acceleration. When the transit times of the forward-direction pulses and reverse-direction pulses are added, the time δ**t** is cancelled, leaving $2t_B$. That is,

$$T_{sum}=(t_B+\delta t)+(t_B-\delta t)=2t_B \qquad (1)$$

When the two transit times are subtracted, $t_B$ disappears, leaving 2δ**t,** that is:

$$T_{dif}=(t_B+\delta t)-(t_B-\delta t)=2\delta t \qquad (2)$$

As described above, the VDC factor δ**s** is the distance passed by the body 2 over the transit time when the body experiences the acceleration **a,** and therefore:

$$\delta s = \tfrac{1}{2}a(t_B+\delta t)^2 \qquad (3)$$

On the other hand, the sound pulse passes the same distance δ**s** during the additional period of time δ**t,** that is:

$$\delta s = v\delta t \qquad (4)$$

According to the above equations (3) and (4), the linear acceleration **a** can be estimated as follows:

$$a = \frac{2v\delta t}{(t_B+\delta t)^2} \qquad (5)$$

Taking into consideration that $v=S_B/t_B$, we have:

$$a = \frac{2S_B\delta t}{t_B(t_B+\delta t)^2} \qquad (6)$$

From the above, it can be seen that the acceleration **a** can be computed from the known length of the tube $s_B$ and the measured transit times **T** for the forward-direction and reverse-direction sonic pulse to traverse from one end to the opposite end of the tube. Thus, by adding the transit times of the forward-direction and reverse-direction pulses, the tube transit time $t_B$ (namely **$2t_B$**) is determined (Eq. 1). By subtracting the transit times of the forward-direction and reverse-direction sonic pulses, the VDC factor transit time δ**t** due to acceleration is determined (Eq. 2), this value being positive for acceleration and negative for deceleration.

Since the method is based on measuring the change in the transit time pulses due to the VDC factor (the "virtual distance change" in the length of the tube due to acceleration), the method could theoretically be implemented by measuring the change in transit time of only forward-direction sonic pulses. However, by measuring the transit times of both forward-direction and reverse-direction sonic pulses as described above, the computations are greatly simplified since they eliminate the velocity factor. Moreover, they tend to cancel the effects of spurious signals or those resulting from changes in temperature, pressure, etc.

Also, it is preferred to provide a plurality **N** of forward-direction pulses and a corresponding plurality of **N** reverse-direction pulses in order to increase the effective length of the tube and thereby the precision of the measurement. Thus, the effective length $s_B$ of the tube 2 can be multiplied by any desired number **N**, such as 10 or 100, or more, by transmitting **N** forward-direction pulses each being transmitted in the forward direction from the first location to the second location upon receipt of the preceding pulse at the second location, and by similarly transmitting **N** reverse-direction pulses, each being transmitted in the reverse direction from the second location upon receipt of the preceding pulse at the first location.

The following will describe one example of implementing the novel method. In this example, it will be assumed that tube 2 is of 20 cm in length and is filled with air, such that the sonic velocity within the tube is 340 M/sec, that is the transit time of sound through the tube would be 588.24 μsec.

Assuming that oscillator 18 has a clock frequency of 64 MHz, it will be seen that each clock is of $15.625 \cdot 10^{-9}$ seconds. For a 20 cm tube with travel time of 588.25 μsec, the cycles counter 14 will count to the value of $588.25 \cdot 10^{-6} \div 15.625 \cdot 10^{-9} = 37648$ for each cycle involving one forward-direction pulse and one reverse-direction pulse. If each measurement of acceleration utilizes sixteen forward-direction sonic pulses and sixteen reverse-direction sonic pulses, cycle counter 14 will count to 602368 cycles for each measurement of acceleration.

Thus, if there is no acceleration, the forward-direction pulse counter 15, and the reverse-direction pulse counter 18, will both count to the same value, 602368. This value represents the value $t_B$, namely the transit time of the sonic pulse for traversing the sonic body (i.e. tube 2) under zero acceleration. When there is acceleration, however, one counter will count $t_B + \delta t$, and the other counter will count $t_B - \delta t$, according to the magnitude and direction of acceleration, as described above. As also described above, since the distance $s_B$, namely the transit distance in the tube 2, is precisely known, determination of $t_B$ and $\delta t$ enables the processor 10 to compute the acceleration **a** per Equations (1), (2) and (9) above.

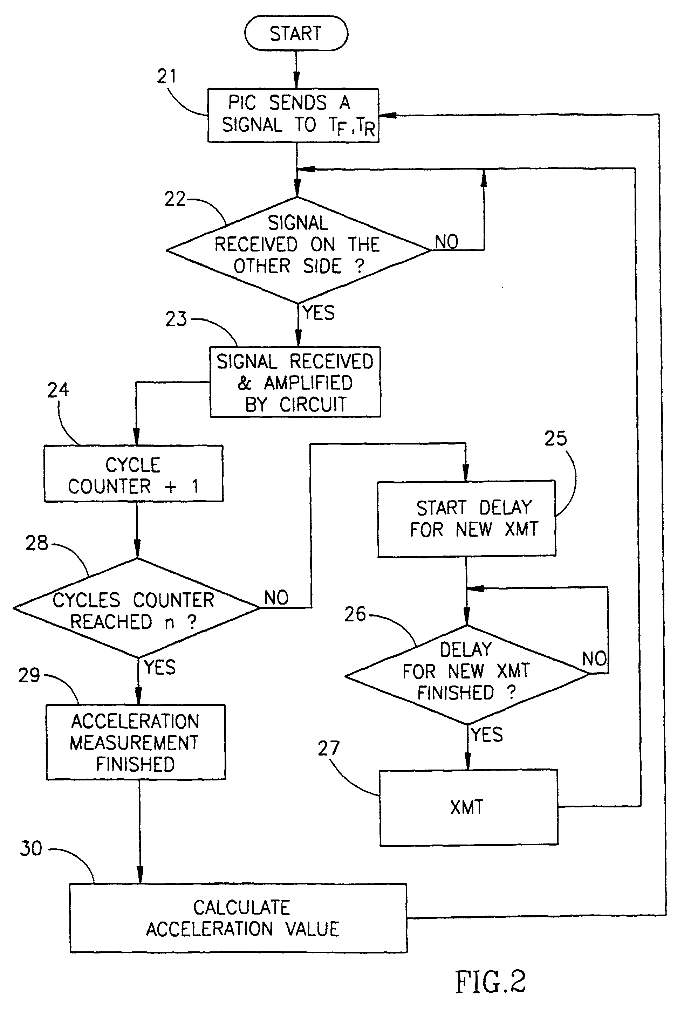

Fig. 2 illustrates the overall operation of the system. Thus, the processor 10 transmits a signal via transmitter logic 11 to the forward-direction pulse transmitter $T_F$ and also to the reverse-direction pulse transmitter $T_R$ at the opposite ends of the tube 2 (block 21). When the sonic pulse is received by the respective detector, $D_F$ or $D_R$ (block 22), the signals generated by the detectors are amplified in the respective amplifier 12, 16 (block 23) and thresholded with respect to a reference voltage in their respective comparators 13, 17, to increment the cycles counter 14 (block 24). The processor 10 imposes a predetermined delay (blocks 25-27) after each pulse transmission before actuating the next pulse transmission in order to permit the transmitter to settle down after its previous transmission. The transit times of the forward-direction pulses are measured in the counter 15, and the transit times for the reverse-direction pulses are measured in the counter 18. A plurality **N,** 16 in the present example, of the forward-direction pulses are thus transmitted, in succession, each being transmitted from its transmitter $T_F$ from side 4 of tube 2 immediately upon detection of the preceding forward-direction pulse by detector $D_F$ in the opposite side 5 of the tube. A similar plurality **N** of reverse-direction pulses are also transmitted in succession by transmitter $T_R$ from side 5 of tube 2 each being transmitted immediately upon detection of the preceding reverse-direction pulse by detector $D_R$ at side 4 of the tube. The transit times of all the forward-direction pulses are accumulated in the counter 15, and the transit times of all the reverse-direction pulses are accumulated in the counter 18. When the predetermined number **N** of pulses have thus been transmitted and detected (block 28), the information from the counters 15 and 18, as well as that from the cycles counter 14, are processed in the processor 10, together with the known length $s_B$ of the tube 2, so as to calculate the acceleration **a** in the manner described above (blocks 29, 30).

After the processor 10 has determined acceleration, this value may be displayed on a screen 32 (Fig. 1), recorded as shown at 33, and/or further processed. Thus, the linear acceleration value calculated by the processor 10 may be integrated over a predetermined interval to determine velocity, as shown at 34, and may be further integrated to determine displacement or movement, as shown at 35.

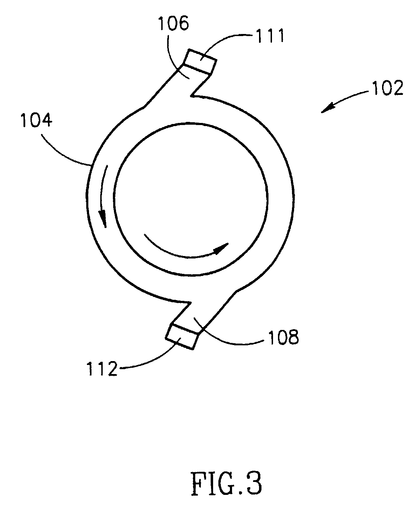

Reference is now made to Fig. 3, illustrating another example of a body, generally at 102, capable of transmitting sonic pulses, which can be employed in the apparatus 1 for measuring an angular acceleration. The body 102 is formed of a main tube 104 and a pair of short tubes 106 and 108 connected to the main tube. The main tube 104 is configured like a ring. Alternatively, although not specifically shown, the main tube 104 may be designed like a spiral with connected ends. The tubes 106 and 108 form two projections from the main ring-shaped tube 104, being integrally made with the latter. In other words, each of the tubes 106 and 108 is an extension of the main tube 104. Similarly to the body 2 of the previously described example, the body 102 is filled with fluid, i.e. gas or liquid. A pair of sensors 110 and 112 are located inside the short tubes 106 and 108, respectively. It will be thus readily understood that such location of the sensors outside of the main tube 104 provides no intervention into the circulation of the fluid within the main tube 104.

Rotation of the body 102 with a constant angular speed for a relatively long period of time, causes rotation of the fluid's particles inside the tube with the same angular speed because of fluid's viscosity. Hence, there is no relative motion between the fluid and the sensors, and the transit times along the ring-shaped tube 104 in the two opposite directions are of equal values not depending on the values of speed. When the angular speed of the tube 102 changes, the fluid's particles start to move with another value of speed. This occurs after a short period of time which depends on the fluid's viscosity and mass due to inertia. It is appreciated, that the less mass and more viscosity, the shorter this period of time, i.e. response time. Thus, there appears a relative motion between the fluid and the sensors 110 and 112. Accordingly, the transit times in both directions become different, not equals and depend on a difference between the values of the angular speed of the fluid and the tube 104. Similarly, the faster the angular speed change (i.e. angular acceleration), the more the difference. Thus, the transit time between the sensors 106 and 108 depends on the angular acceleration of the ring-shaped tube 104. In order to calculate this angular acceleration **A**, a balance of forces should be considered. Thus, each layer of the fluid inside the tube is affected by two forces - friction and inertia. It is clear that gravity force should not be considered. Indeed, irrespectively of a spatial orientation of the body 102, the gravity force vector in the whole volume of fluid formed of a plurality of particles would be completely compensated. The friction force depends on the viscosity of the fluid and its relative speed, while the force of inertia depends on mass and acceleration.
Therefore:

$$K_m \cdot \frac{d\omega g}{dt} + K_v \cdot (\omega_g - \omega_r) = 0 \qquad (10)$$

where $K_m$ is a coefficient depending on the inertia; $K_v$ is a coefficient depending on the viscosity; $\omega_g$ is the angular speed of the fluid; and $\omega_r$ is the angular speed of the tube 102. When the angular acceleration A of the body 102 becomes constant during a long period of time, i.e. **A=d$\omega_r$/dt=Const,** the above differential equation (10) has the following solution:

$$\omega_g - \omega_r = A \cdot K_m / K_v \qquad (11)$$

This difference is measured by means of the transit times in the both opposite directions in the manner described above. The ratio $K_m/K_v$ characterizes a sensitivity of the apparatus 1, and may be determined during a calibration stage in a conventional manner using respective reference data.

Thus, considering the transit time **T** of a sonic pulse in both directions as described above, that is:

$$T_{sum} = \frac{S_B}{v}(1+\frac{V_d}{v})+\frac{S_B}{v}(1-\frac{V_d}{v})=\frac{2S_B}{v} \qquad (12)$$

$$T_{dif}=\frac{S_B}{v}(1+\frac{V_d}{v})-\frac{S_B}{v}(1-\frac{V_d}{v})=\frac{2S_B}{v}\cdot\frac{V_d}{v}=2\delta t \qquad (13)$$

wherein $V_d$ is a linear speed of the fluid relative to the tube 102.

According to the above equations, the relative linear speed $V_d$ is as follows:

$$V_d= \frac{S_B \cdot \delta t}{t_B^2} \qquad (14)$$

Using the known mathematical dependence between angular and linear speeds of an object:

$$\omega_r - \omega_g = V_d/R$$

where **R** is a radius of the ring 104, and considering the above equations, the final value of the angular acceleration **A** can be calculated as follows:

$$A = \frac{(\omega_r - \omega_g)}{K_m} = \frac{K_v}{K_m} \cdot \frac{S_B \cdot \delta t}{R \cdot t_B^2} \qquad (15)$$

While the invention has been described with respect to the above preferred embodiments, it will be appreciated that this is set forth merely for purposes of example. Thus, since the described method can be implemented without dependency on the velocity of the pulse, the method theoretically could be practiced not only with respect to sonic pulses, and not only with respect to air or other gas bodies, but also with respect to liquid bodies. Many other variations, modifications and applications of the invention will be apparent.

**Claims**

1. A method of measuring acceleration of a moving object, comprising the steps of:

(a) applying to the moving object, so as to be carried thereby and to move therewith, a body (2) capable of transmitting pulses of energy.

(b) transmitting a pulse of said energy in a forward direction from a first location ($T_F$, 4) on said body to a second location ($D_F$, 5) on said body at a known distance from said first location;

(c) detecting the transmitted pulse at said second location;

(d) measuring the transit time of the pulse from said first location to said second location; and

(e) utilizing said measured transit time, together with said known distance between said first and second locations, for determining acceleration of the body and thereby of the moving object.

2. The method according to Claim 1, wherein said pulse is a sonic pulse, and said body is one capable of transmitting pulses of sonic energy.

3. The method according to Claim 1, further comprising eliminating a pulse velocity factor.

4. The method according to Claim 3, wherein said eliminating comprising:

   - transmitting a pulse of said energy in a reverse direction from the second location on said body to the first location on said body at a known distance from said first location;

   - detecting the transmitted pulse at said first location;

   - measuring the transit time of the pulse from said second location to said first location; and

   utilizing said measured transit time of the reverse direction, together with said measured transit time of the forward direction and the known distance between said first and second locations, for determining acceleration of the body and thereby of the moving object.

5. The method according to Claim 1, wherein the known distance between said first and second locations is effectively multiplied by:

   transmitting a plurality **N** of said forward-direction pulses successively from said first location to said second location, each pulse being transmitted from said first location upon detection of the preceding pulse at said second location; measuring the total transit times of said **N** forward-direction pulses; and utilizing said measured total transit times, together with said known distance between said first and second locations multiplied by **N**, for determining acceleration of the body and thereby of the moving object.

6. The method according to Claim 4, wherein the known distance between said first and second locations is effectively multiplied by:

   transmitting a plurality **N** of said forward-direction and the same plurality **N** of said reverse-direction pulses, each forward-direction pulse being transmitted from said first location upon detection of the preceding forward-direction pulse at said second location, and each reverse-direction pulse being transmitted from said second location upon detection of the preceding reverse-direction pulse at said first location; measuring the total transit times of said **N** forward-direction pulses; measuring the total transit times of said **N** reverse-direction pulses; and utilizing said measured total transit times, together with said known distance between said first and second locations multiplied by **N**, for determining acceleration of the body and thereby of the moving object.

7. The method according to Claim 1, wherein said transit time is measured by counting the number of clock pulses produced by a high-frequency oscillator during the respective time.

8. The method according to Claim 1, wherein the operations set forth are periodically repeated during a time interval for periodically measuring the acceleration of the moving object, and the measured acceleration is integrated over said time interval for determining velocity of the moving object.

9. The method according to Claim 8, wherein the determined velocity of the moving object is further integrated over said time interval for determining displacement of the moving object during said time interval.

10. The method according to Claim 1, wherein said acceleration to be determined is a linear acceleration of the object.

11. The method according to Claim 10, wherein said body capable of transmitting pulses is a cylindrically-shaped tube filled with a gaseous medium and sealed at both ends, said first location being at one end of said tube, and said second location being at the opposite end of said tube.

12. The method according to Claims 4 and 11 wherein the transit times of the forward-direction and reverse-direction pulses, and said known distance $s_B$,

are utilized to determine said acceleration by:

adding the transit times of the forward-direction pulses with the transit times of the reverse-direction pulses to produce a value $2t_B$ which is equal to twice the transit time $t_B$ of the pulses through the body when there is no acceleration; subtracting the transit times of the forward-direction pulses from the transit times of the reverse-direction pulses to produce a value $2\delta t$ equal to twice the change in the transit time $\delta t$ of the pulses due to acceleration; and determining acceleration $a$ according to the following equation:

$$a = \frac{2S_B\delta t}{t_B(t_B+\delta t)^2}$$

13. The method according to Claim 11, wherein said tube is filled with air.

14. The method according to Claim 1, wherein said acceleration to be determined is an angular acceleration.

15. The method according to Claim 14, wherein said body capable of transmitting pulses is a vessel (104) formed of a main tube filled with a fluid medium and having a first and a second short tubes (106, 108) integrally made with said main tube and projecting therefrom, said first location being in said first short tube, and said second location being in said second short tube.

16. The method according to Claim 15, wherein said main tube is in the form of a ring.

17. The method according to Claim 15, wherein said main tube is in the form of a spiral with connected ends.

18. The method according to Claims 4 and 15, wherein the transit time $t_B$ of the pulses through the body when there is no acceleration, change in the transit time $\delta t$ of the pulses due to acceleration, the known distance $s_B$, known radius $R$ of the main tube and known sensitivity $K_v/K_m$ of the apparatus are utilized to determine said angular acceleration $A$ according to the following equation:

$$A = \frac{K_v}{K_m}\cdot\frac{S_B\cdot\delta t}{R\cdot t_B^2}$$

19. The method according to Claim 15, wherein said fluid medium is gas.

20. The method according to Claim 15, wherein said fluid medium is liquid.

21. An apparatus for measuring acceleration of a moving object, comprising:

- a body (2) capable of transmitting energy pulses to be carried by said object so as to move therewith:
- a pulse transmitter ($T_F$) at a first location (4) on the body (2) for transmitting pulses of said energy in a forward direction from said first location to a second location on the body (2) at a known distance from said first location;
- a pulse detector ($D_F$) at said second location (5) on the body (2);

a measuring system (15) for measuring the transit time of pulses from said first location to said second location; and

- a processor (10) for controlling said transmitter, controlled by said detector, and utilizing said measured transit time together with said known distance between said first and second locations, for determining acceleration of the body and thereby of the moving object.

22. The apparatus according to Claim 21, wherein said pulse transmitter is a sonic pulse transmitter.

23. The apparatus according to Claim 21, further comprising a means for eliminating a pulse velocity factor.

24. The apparatus according to Claim 23, wherein said means for eliminating the pulse velocity factor includes a pulse transmitter ($T_R$) at said second location on the body (2) for transmitting reverse-direction pulses therefrom to said first location, and a pulse detector ($D_R$) at said first location on the body (2) for detecting said reverse-direction pulses, said measuring system also measuring the transit times of said reverse-direction pulses from said second location to said first location, and said processor (10) also for controlling said transmitter transmitting said reverse-direction pulses, being controlled by said detector detecting said reverse-direction pulses, and also utilizing said measured transit times of the reverse-direction pulses for determining acceleration of the body and thereby of the moving object.

25. The apparatus according to Claim 21, wherein said processor (10) is adapted to control said transmitter of forward-direction pulses to transmit a plurality $N$ of said forward-direction pulses successively from said first location to said second location, each pulse being transmitted from said first location upon detection of the preceding pulse at said second location;

 wherein said measuring system (15) is adapted to measure the total transit times of said **N** forward-direction pulses; and

 wherein said processor (10) is adapted to utilize said measured total transit times, together with said known distance between said first and second locations multiplied by **N**, for determining the acceleration of the body and thereby of the moving object.

26. The apparatus according to Claim 24,

 wherein said processor (10) is adapted to control said forward-direction transmitter to transmit a plurality **N** of said forward-direction pulses successively from said first location to said second location each being transmitted from said first location upon detection of the preceding forward-direction pulse at said second location, and also controls said reverse-direction transmitter for transmitting the same plurality **N** of said reverse-direction pulses successively from said second location to said first location, each being transmitted from said second location upon detection of the preceding reverse-direction pulse at said first location; wherein said measuring system measures the total transit times of said **N** forward-direction pulses, and the total transit times of said **N** reverse-direction pulses; and

 wherein said processor (10) is adapted to utilize said total transit times of said forward-direction pulses and said total transit times of said reverse-direction pulses, together with said known distance between said first and second locations multiplied by **N**, for determining the acceleration of the body and thereby of the moving object.

27. The apparatus according to Claim 21, wherein said measuring circuit includes a high frequency oscillator (19) generating clock pulses, and a counter (15, 18) for counting the number of clock pulses produced during the respective transit times measured.

28. The apparatus according to Claim 21, wherein said processor (10) is adapted to determine the acceleration of the moving object periodically for a predetermined time interval, and to integrate said determined acceleration over said time interval to determine velocity of the moving object at the end of said time interval.

29. The apparatus according to Claim 28, wherein said processor (10) is adapted to integrate said determined velocity over said time interval to determine the displacement of said moving object during said predetermined time interval.

30. The apparatus according to Claim 21, wherein said acceleration to be measured is a linear acceleration of the object.

31. The apparatus according to Claim 30, wherein said body capable of transmitting said pulses is a cylindrically-shaped tube (104) filled with a gaseous medium and sealed at both ends, said first location being at one end (111) of said tube, and said second location being at the opposite end (112) of said tube.

32. The apparatus according to Claims 23 and 31, wherein said processor (10) is adapted to utilize the transit times of the forward-direction pulses and the reverse-direction pulses, and said known distance $s_B$, to determine said acceleration by:

 adding the total transit times of the forward-direction pulses with the total transit times of the reverse-direction pulses to produce a value $2t_B$ which is equal to twice the transit time $t_B$ of the pulse through the body when there is no acceleration;
 subtracting the total transit times of the forward-direction pulses from the total transit times of the reverse-direction pulses to produce a value $2\delta t$ equal to twice the change in the transit times $\delta t$ of the pulses due to acceleration; and
 determining the linear acceleration **a** according to the following equation:

$$a = \frac{2S_B\delta t}{t_B(t_B + \delta t)^2}$$

33. The apparatus according to Claim 31, wherein said tube is filled with air.

34. The apparatus according to Claim 21, wherein said acceleration to be determined is an angular acceleration.

35. The apparatus according to Claim 34, wherein said body capable of transmitting pulses is a vessel formed of a main tube (104) filled with a fluid medium and having a first and a second short tubes (106, 108) integrally made with said main tube and projecting therefrom, said first location being in said first short tube, and said second location being in said second short tube.

36. The apparatus according to Claim 35, wherein said main tube (104) is in the form of a ring.

37. The apparatus according to Claim 35, wherein said main tube is in the form of a spiral with connected ends.

**38.** The apparatus according to Claims 23 and 35, wherein said processor (10) is adapted to utilize the transit time $t_B$ of the pulses through the body when there is no acceleration, the change in the transit time $\delta t$ of the pulses due to acceleration, said known distance $s_B$, known radius $R$ of the main tube and known sensitivity $K_m/K_v$ to determine said angular acceleration $A$ according to the following equation:

$$A = \frac{K_v}{K_m} \cdot \frac{S_B \cdot \delta t}{R \cdot t_B^2}$$

**39.** The apparatus according to Claim 35, wherein said fluid medium is gas.

**40.** The apparatus according to Claim 35, wherein said fluid medium is liquid.

**Patentansprüche**

**1.** Verfahren zum Messen der Beschleunigung eines sich bewegenden Objektes, das die Schritte aufweist:

(a) Anbringen eines Körpers (2) an dem sich bewegenden Objekt, so daß er von diesem getragen wird und sich mit diesem bewegt, und der in der Lage ist, Pulse einer Energie zu übertragen,
(b) Übertragung eines Pulses dieser Energie in einer Vorwärtsrichtung ($T_F$, 4) von einem ersten Ort auf diesem Körper zu einem zweiten Ort ($D_F$, 5) auf diesem Körper mit einem bekannten Abstand von dem ersten Ort,
(c) Erfassen des übertragenen Pulses an dem zweiten Ort,
(d) Messen der Übertragungszeit des Pulses von dem ersten Ort zu dem zweiten Ort und
(e) Verwenden der gemessenen Übertragungszeit zusammen mit dem bekannten Abstand zwischen dem ersten und dem zweiten Ort für das Bestimmen der Beschleunigung des Körpers und dadurch des sich bewegenden Objektes.

**2.** Verfahren nach Anspruch 1, bei dem der Puls ein Schallpuls ist und der Körper in der Lage ist, Schallenergiepulse zu übertragen.

**3.** Verfahren nach Anspruch 1, das weiterhin die Eliminierung eines Pulsgeschwindigkeitsfaktors aufweist.

**4.** Verfahren nach Anspruch 3, in dem die Eliminierung aufweist:

- Übermitteln eines Pulses dieser Energie in einer umgekehrten Richtung von dem zweiten Ort auf dem Körper mit einer bekannten Distanz von dem ersten Ort zu dem ersten Ort auf dem Körper,
- Erfassen des übertragenen Pulses an dem ersten Ort,
- Messen der Übertragungszeit des Pulses von dem zweiten Ort zu dem ersten Ort und

Verwenden der gemessenen Übertragungszeit in der umgekehrten Richtung zusammen mit der gemessenen Übertragungszeit in der Vorwärtsrichtung und der bekannten Distanz zwischen dem ersten und dem zweiten Ort für das Bestimmen der Beschleunigung des Körpers und dadurch des sich bewegenden Objektes.

**5.** Verfahren nach Anspruch 1, bei dem die bekannte Distanz zwischen dem ersten und dem zweiten Ort effektiv multipliziert wird durch:

Übertragung einer Mehrzahl N der Pulse in Vorwärtsrichtung nacheinander von dem ersten Ort zu dem zweiten Ort, wobei jeder Puls mit Erfassung des vorherigen Pulses an dem zweiten Ort von dem ersten Ort übertragen wird, Messen der gesamten Übertragungszeiten der N vorwärts gerichteten Pulse und Verwenden der gemessenen Gesamtübertragungszeiten zusammen mit der bekannten Distanz zwischen dem ersten und dem zweiten Ort multipliziert mit N für das Bestimmen der Beschleunigung des Körpers und dadurch des sich bewegenden Objektes.

**6.** Verfahren nach Anspruch 5, bei dem die bekannte Distanz zwischen dem ersten und dem zweiten Ort effektiv multipliziert wird durch:

Übertragung einer Mehrzahl N von vorwärts gerichteten und der gleichen Mehrzahl N von rückwärts gerichteten Pulsen, wobei jeder vorwärts gerichtete Puls mit Erfassung des vorherigen vorwärts gerichteten Pulses an dem zweiten Ort von dem ersten Ort übertragen wird und jeder rückwärts gerichtete Puls von dem zweiten Ort mit Erfassung des vorherigen rückwärts gerichteten Pulses an dem ersten Ort übertragen wird, Messen der gesamten Übertragungszeiten der N vorwärts gerichteten Pulse, Messen der gesamten Übertragungszeiten der N rückwärts gerichteten Pulse und Verwenden der gemessenen Gesamtübertragungszeiten zusammen mit dem mit N multiplizierten bekannten Abstand zwischen dem ersten und zweiten Ort für das Bestimmen der Beschleunigung des Körpers und dadurch des sich bewegenden Objektes.

7. Verfahren nach Anspruch 1, bei dem die Übertragungszeit durch Zählen der Anzahl von Taktpulsen, die von einem Hochfrequenzoszillator während der jeweiligen Zeit erzeugt wurden, gemessen wird.

8. Verfahren nach Anspruch 1, in dem die beschriebenen Operationen periodisch wiederholt werden während eines Zeitintervalls für das periodische Messen der Beschleunigung des sich bewegenden Objektes und die gemessene Beschleunigung über das Zeitintervall integriert wird für die Bestimmung der Geschwindigkeit des sich bewegenden Objektes.

9. Verfahren nach Anspruch 8, in dem die bestimmte Geschwindigkeit des sich bewegenden Objekts noch einmal über das Zeitintervall integriert wird für das Bestimmen des während des Zeitintervalls zurückgelegten Weges des sich bewegenden Objektes.

10. Verfahren nach Anspruch 1, in dem die zu bestimmende Beschleunigung eine Linearbeschleunigung des Objektes ist.

11. Verfahren nach Anspruch 10, in dem der Körper, der in der Lage ist, Pulse zu übertragen, ein zylindrisch geformtes Rohr ist, das mit einem gasförmigen Medium gefüllt ist und an beiden Enden abgedichtet ist, wobei der erste Ort an einem Ende des Rohres ist und der zweite Ort an dem entgegengesetzten Ende des Rohres ist.

12. Verfahren nach Anspruch 4 und 11, in dem die Übertragungszeiten des vorwärts gerichteten und des rückwärts gerichteten Pulses und die bekannte Distanz $s_B$ verwendet werden, um die Beschleunigung zu bestimmen durch:

> Addieren der Übertragungszeiten der vorwärts gerichteten Pulse mit den Übertragungszeiten der rückwärts gerichteten Pulse, um einen Wert $2 t_B$ zu erhalten, der gleich dem Doppelten der Übertragungszeit $t_B$ der Pulse durch den Körper ist, wenn keine Beschleunigung vorhanden ist,
> Subtrahieren der Übertragungszeiten der vorwärts gerichteten Pulse von den Übertragungszeiten der rückwärts gerichteten Pulse, um einen Wert $2 \delta t$ zu erhalten, der gleich dem Doppelten der Veränderung in der Übertragungszeit $\delta t$ der Pulse aufgrund der Beschleunigung ist, und
> Bestimmen der Beschleunigung a entsprechend der folgenden Gleichung:

$$a = \frac{2 S_B \delta t}{t_B (t_B + \delta t)^2}$$

13. Verfahren nach Anspruch 11, bei dem das Rohr mit Luft gefüllt ist.

14. Verfahren nach Anspruch 1, in dem die zu bestimmende Beschleunigung eine Dreh- bzw. Winkelbeschleunigung ist.

15. Verfahren nach Anspruch 14, bei dem der Körper, der in der Lage ist, Pulse zu übertragen, ein Gefäß (104) ist, das aus einer Hauptröhre, die mit einem fluiden Medium gefüllt ist, gebildet ist und eine erste und eine zweite Kurzröhre (106, 108) hat, die integral mit dem Hauptrohr ausgebildet sind und von diesem vorspringen, wobei der erste Ort in dem ersten Kurzrohr ist und der zweite Ort in dem zweiten Kurzrohr ist.

16. Verfahren nach Anspruch 15, bei dem die Hauptröhre die Form eines Ringes hat.

17. Verfahren nach Anspruch 15, in dem die Hauptröhre die Form einer Spirale mit verbundenen Enden hat.

18. Verfahren nach den Ansprüchen 4 und 15, in dem die Übertragungszeit $t_B$ der Pulse durch den Körper, wenn keine Beschleunigung auftritt, die Veränderung in der Übertragungszeit $\delta t$ der Pulse aufgrund der Beschleunigung, die bekannte Distanz $s_B$, der bekannte Radius R der Hauptröhre und die bekannte Empfindlichkeit $K_v / K_m$ des Gerätes verwendet wird, um die Winkel- bzw. Drehbeschleunigung A gemäß der folgenden Gleichung zu bestimmen:

$$A = \frac{Kv}{Km} \cdot \frac{S_B \cdot \delta t}{R \cdot t_B^{\,2}}$$

19. Verfahren nach Anspruch 15, in dem das fluide Medium Gas ist.

20. Verfahren nach Anspruch 15, in dem das fluide Medium eine Flüssigkeit ist.

21. Vorrichtung für das Messen der Beschleunigung eines sich bewegenden Objektes, die aufweist:

- einen Körper (2), der von dem Objekt getragen wird, so daß er sich mit diesem bewegt, und der in der Lage ist, Pulse einer Energie zu übertragen,
- einen Pulsübertrager ($T_F$) an einem ersten Ort (4) auf dem Körper (2) für das Übertragen von Pulsen der Energie in einer Vorwärtsrichtung von dem ersten Ort zu einem zweiten Ort auf dem Körper (2) mit einem bekannten Abstand von dem ersten Ort,

- einen Pulsdetektor ($D_F$) an dem zweiten Ort (5) auf dem Körper (2),
- ein Meßsystem (15) für das Messen der Übertragungszeit der Pulse von dem ersten Ort zu dem zweiten Ort und
- ein Prozessor (10), der den Übertrager steuert, der von dem Detektor gesteuert wird und die gemessene Übertragungszeit zusammen mit dem bekannten Abstand zwischen dem ersten und zweiten Ort verwendet für das Bestimmen der Beschleunigung des Körpers und dadurch des sich bewegenden Objektes.

22. Vorrichtung nach Anspruch 21, in dem der Pulsübertrager ein Schallpulsübertrager ist.

23. Vorrichtung nach Anspruch 21, die weiterhin eine Einrichtung für das Eliminieren eines Pulsgeschwindigkeitsfaktors aufweist.

24. Vorrichtung nach Anspruch 23, in der die Einrichtung für das Eliminieren des Pulsgeschwindigkeitsfaktors einen Pulsübertrager ($T_R$) an dem zweiten Ort auf dem Körper (2) beinhaltet für das Übertragen rückwärts gerichteter Pulse hiervon zu dem ersten Ort und einen Pulsdetektor ($D_R$) an dem ersten Ort auf dem Körper (2) aufweist für das Erfassen der rückwärts gerichteten Pulse, wobei das Meßsystem ebenso die Übertragungszeiten der rückwärts gerichteten Pulse von dem zweiten Ort zu dem ersten Ort mißt und der Prozessor (10) ebenso für die Steuerung des Übertragers, der die zurück gerichteten Pulse überträgt, vorgesehen ist und von dem Detektor gesteuert wird, der die zurück gerichteten Pulse detektiert, und ebenso die gemessenen Übertragungszeiten der zurück gerichteten Pulse verwendet für das Bestimmen der Beschleunigung des Körpers und dadurch des sich bewegenden Objektes.

25. Vorrichtung nach Anspruch 21,
in der die Steuerung des Prozessors (10) an den Übertrager der vorwärts gerichteten Pulse angepaßt ist, um eine Mehrzahl N von vorwärts gerichteten Pulsen aufeinanderfolgend zu übertragen von dem ersten Ort zu dem zweiten Ort, wobei jeder Puls mit Erfassung des vorherigen Pulses an dem zweiten Ort von dem ersten Ort übertragen wird,
wobei das Meßsystem (15) angepaßt ist, um die Gesamtübertragungszeiten der N vorwärts gerichteten Pulse zu messen und
wobei der Prozessor (10) angepaßt ist, um die gemessenen Gesamtübertragungszeiten zusammen mit dem mit N multiplizierten bekannten Abstand zwischen dem ersten und dem zweiten Ort zu verwenden für das Bestimmen der Beschleunigung des Körpers und dadurch des sich bewegenden Objektes.

26. Vorrichtung nach Anspruch 24,
in der der Prozessor (10) angepaßt ist, um den vorwärts gerichteten Übertrager zu steuern, um eine Mehrzahl N von vorwärts gerichteten Pulsen aufeinanderfolgend von dem ersten Ort zu dem zweiten Ort zu übertragen, wobei jeder von dem ersten Ort übertragen wird mit Erfassung des vorherigen vorwärts gerichteten Pulses an dem zweiten Ort und ebenso um den rückwärts gerichteten Übertrager zu steuern für das Übertragen der gleichen Mehrzahl N der rückgerichteten Pulse aufeinanderfolgend von dem zweiten Ort zu dem ersten Ort, wobei jeder Puls von dem zweiten Ort mit Erfassen des vorherigen rückwärts gerichteten Pulses an den ersten Ort übertragen wird, wobei das Meßsystem die Gesamtübertragungszeiten der N vorwärts gerichteten Pulse und die Gesamtübertragungszeiten der N rückwärts gerichteten Pulse mißt und
wobei der Prozessor (10) angepaßt ist, um die Gesamtübertragungszeiten der vorwärts gerichteten Pulse und die Gesamtübertragungszeiten der rückwärts gerichteten Pulse zusammen mit dem mit N multiplizierten bekannten Abstand zwischen dem ersten und dem zweiten Ort zu verwenden für die Bestimmung der Beschleunigung des Körpers und dadurch des sich bewegenden Objektes.

27. Vorrichtung nach Anspruch 21, in der der Meßkreis einen Hochfrequenzoszillator (19), der Taktpulse erzeugt, und einen Zähler (15, 18) für das Zählen der Anzahl von Taktpulsen, die während der gemessenen Übertragungszeiten erzeugt wurden, beinhaltet.

28. Verfahren nach Anspruch 21, in dem der Prozessor (10) angepaßt ist, um die Beschleunigung des sich bewegenden Objektes periodisch innerhalb eines vorherbestimmten Zeitintervalls zu bestimmen und die bestimmte Beschleunigung über das Zeitintervall zu integrieren, um die Geschwindigkeit des sich bewegenden Objektes an dem Ende des Zeitintervalls zu bestimmen.

29. Vorrichtung nach Anspruch 28, in der der Prozessor (10) angepaßt ist, um die bestimmte Geschwindigkeit über das Zeitintervall zu integrieren, um den von dem sich bewegenden Objekt während dem vorbestimmten Zeitintervall zurückgelegten Weg zu bestimmen.

30. Vorrichtung nach Anspruch 21, in der die-zu messende Beschleunigung eine Linearbeschleunigung des Objektes ist.

**31.** Vorrichtung nach Anspruch 30, in der der Körper, der in der Lage ist, die Pulse zu übertragen, ein zylindrisch geformtes Rohr (104) ist, das mit einem gasförmigen Medium gefüllt ist und an beiden Enden abgedichtet ist, wobei der erste Ort an einem Ende (111) des Rohres ist und der zweite Ort an dem entgegengesetzten Ende (112) des Rohres ist.

**32.** Vorrichtung nach Anspruch 23 und 31, in dem der Prozessor (10) angepaßt ist, um.die Übertragungszeiten der vorwärts gerichteten Pulse und der zurück gerichteten Pulse und den bekannten Abstand $s_B$ zu verwenden, um die Beschleunigung zu bestimmen durch:

Addieren der Gesamtübertragungszeiten der vorwärts gerichteten Pulse mit den Gesamtübertragungszeiten der rückwärts gerichteten Pulse, um einen Wert $2t_B$ zu erzeugen, der gleich dem Doppelten der Übertragungszeit $t_B$ des Pulses durch den Körper ist, wenn keine Beschleunigung auftritt,
Subtrahieren der Gesamtübertragungszeiten der vorwärts gerichteten Pulse von den Gesamtübertragungszeiten der rückwärts gerichteten Pulse, um einen Wert $2\delta t$ zu bestimmen, der gleich dem Doppelten der Veränderung der Übertragungszeiten $\delta t$ der Pulse aufgrund der Beschleunigung ist, und
Bestimmung der Linearbeschleunigung a gemäß der folgenden Gleichung:

$$a = \frac{2S_B\delta t}{t_B(t_B + \delta t)^2}$$

**33.** Vorrichtung nach Anspruch 31, in der das Rohr mit Luft gefüllt ist.

**34.** Vorrichtung nach Anspruch 21, in der die zu bestimmende Beschleunigung eine Winkel- bzw. Drehbeschleunigung ist.

**35.** Vorrichtung nach Anspruch 34, in der der Körper, der in der Lage ist, Pulse zu übertragen, ein Gefäß ist, das aus einer Hauptröhre (104) gebildet wird, die mit einem fluiden Medium gefüllt ist und eine erste und eine zweite Kurzröhre (106, 108) hat, die integral mit der Hauptröhre ausgeführt sind und sich hiervon erstrecken, wobei der erste Ort in der ersten Kurzröhre ist und der zweite Ort in der zweiten Kurzröhre ist.

**36.** Vorrichtung nach Anspruch 35, in dem die Hauptröhre (104) die Form eines Ringes hat.

**37.** Vorrichtung nach Anspruch 35, in der die Hauptröhre in der Form einer Spirale mit verbundenen Enden ist.

**38.** Vorrichtung nach Anspruch 23 und 35, in der der Prozessor (10) angepaßt ist, um die Übertragungszeit $t_B$ der Pulse durch den Körper, wenn keine Beschleunigung auftritt, die Veränderung der Übertragungszeit $\delta t$ der Pulse aufgrund der Beschleunigung, der bekannte Abstand $s_B$, den bekannten Radius R der Hauptröhre und die bekannte Empfindlichkeit $K_m/K_v$ zu verwenden, um die Winkel- bzw. Drehbeschleunigung A gemäß der folgenden Gleichung zu bestimmen:

$$A = \frac{Kv}{Km} \cdot \frac{S_B \cdot \delta t}{R \cdot t_B^2}$$

**39.** Vorrichtung nach Anspruch 35, in der das fluide Medium Gas ist.

**40.** Vorrichtung nach Anspruch 35, in der das fluide Medium eine Flüssigkeit ist.

**Revendications**

**1.** Procédé de mesure de l'accélération d'un objet en mouvement, comprenant les étapes dans lesquelles :

(a) on applique à l'objet en mouvement, afin qu'il soit transporté par celui-ci et qu'il se déplace avec lui, un corps (2) capable d'émettre des impulsions d'énergie ;
(b) on émet une impulsion de ladite énergie dans un sens avant à partir d'une première position ($T_F$, 4) sur ledit corps jusqu'à une seconde position ($D_F$, 5) sur ledit corps à une distance connue de ladite première position ;
(c) on détecte l'impulsion émise à ladite seconde position ;
(d) on mesure le temps de transit de l'impulsion de ladite première position à ladite seconde position ; et
(e) on utilise ledit temps de transit mesuré, ainsi que ladite distance connue entre lesdites première et seconde positions, pour déterminer l'accélération du corps et, ainsi, de l'objet en mouvement.

**2.** Procédé selon la revendication 1, dans lequel ladite impulsion est une impulsion sonique, et ledit corps est un corps capable d'émettre des impulsions d'énergie sonique.

**3.** Procédé selon la revendication 1, comprenant en outre l'élimination d'un facteur de vitesse d'impulsion.

**4.** Procédé selon la revendication 3, dans lequel ladite élimination consiste :

- à émettre une impulsion de ladite énergie dans un sens inverse depuis la seconde position sur ledit corps vers la première position sur ledit corps à une distance connue de ladite première position ;
- à détecter l'impulsion émise à ladite première position ;
- à mesurer le temps de transit de l'impulsion de ladite seconde position à la première position ; et
- à utiliser ledit temps de transit mesuré dans le sens inverse, ainsi que ledit temps de transit mesuré dans le sens avant et la distance connue entre lesdites première et seconde positions, pour déterminer l'accélération du corps et, ainsi, de l'objet en mouvement.

**5.** Procédé selon la revendication 1, dans lequel la distance connue entre lesdites première et seconde positions est en fait multipliée par :

la transmission d'une pluralité N desdites impulsions de sens avant successivement de ladite première position à ladite seconde position, chaque impulsion étant émise de ladite première position lors de la détection de l'impulsion précédente à ladite seconde position ;
la mesure des temps totaux de transit desdites N impulsions de sens avant ; et
l'utilisation desdits temps totaux mesurés de transit, ainsi que de ladite distance connue entre lesdites première et seconde positions multipliée par N, pour déterminer l'accélération du corps et ainsi de l'objet en mouvement.

**6.** Procédé selon la revendication 4, dans lequel la distance connue entre lesdites première et seconde positions est effectivement multipliée par :

la transmission d'une pluralité N desdites impulsions de sens avant et de la même pluralité N desdites impulsions de sens inverse, chaque impulsion de sens avant étant émise depuis ladite première position lors de la détection de l'impulsion de sens avant précédente à ladite seconde position, et chaque impulsion de sens inverse étant émise depuis ladite seconde position à la suite de la détection de l'impulsion de sens inverse précédente à ladite première position ;
la mesure des temps totaux de transit desdites N impulsions de sens avant ;
la mesure des temps totaux de transit desdites N impulsions de sens inverse ; et
l'utilisation desdits temps totaux mesurés de transit, ainsi que de ladite distance connue entre lesdites première et seconde positions multipliée par N, pour déterminer l'accélération du corps et ainsi de l'objet en mouvement.

**7.** Procédé selon la revendication 1, dans lequel ledit temps de transit est mesuré en comptant le nombre d'impulsions d'horloge produites par un oscillateur à haute fréquence pendant le temps respectif.

**8.** Procédé selon la revendication 1, dans lequel les opérations indiquées sont répétées périodiquement pendant un intervalle de temps pour mesurer périodiquement l'accélération de l'objet en mouvement, et l'accélération mesurée est intégrée sur ledit intervalle de temps pour déterminer la vitesse de l'objet en mouvement.

**9.** Procédé selon la revendication 8, dans lequel la vitesse déterminée de l'objet en mouvement est encore intégrée sur ledit intervalle de temps pour déterminer le déplacement de l'objet en mouvement pendant ledit intervalle de temps.

**10.** Procédé selon la revendication 1, dans lequel ladite accélération devant être déterminée est une accélération linéaire de l'objet.

**11.** Procédé selon la revendication 10, dans lequel ledit corps capable d'émettre des impulsions est un tube de forme cylindrique rempli d'un milieu gazeux et scellé aux deux extrémités, ladite première position étant à une extrémité dudit tube et ladite seconde position étant à l'extrémité opposée dudit tube.

**12.** Procédé selon les revendications 4 et 11, dans lequel les temps de transit des impulsions de sens avant et de sens inverse et ladite distance connue $S_B$, sont utilisés pour déterminer ladite accélération en :

additionnant les temps de transit des impulsions de sens avant avec les temps de transit des impulsions de sens inverse pour produire une valeur $2t_B$ qui est égale au double du temps de transit $t_B$ des impulsions à travers le corps lorsqu'il n'y a pas d'accélération ;
soustrayant les temps de transit des impulsions de sens avant des temps de transit des impulsions de sens inverse pour produire une valeur $2\delta t$ égale au double de la variation du temps de transit $\delta t$ des impulsions due à l'accélération ; et
déterminant l'accélération a conformément à l'équation suivante :

$$a = \frac{2S_B\delta t}{t_B(t_B + \delta t)^2}$$

**13.** Procédé selon la revendication 11, dans lequel ledit tube est rempli d'air.

**14.** Procédé selon la revendication 1, dans lequel ladite accélération devant être déterminée est une accélération angulaire.

**15.** Procédé selon la revendication 14, dans lequel ledit corps capable d'émettre des impulsions est un récipient (104) formé d'un tube principal rempli d'un milieu fluide et ayant des premier et second tubes courts (106, 108) réalisés d'une seule pièce avec ledit tube principal et en faisant saillie, ladite première position étant dans ledit premier tube court et ladite seconde position étant dans ledit second tube court.

**16.** Procédé selon la revendication 15, dans lequel ledit tube principal est de la forme d'un anneau.

**17.** Procédé selon la revendication 15, dans lequel ledit tube principal est de la forme d'une spirale dont les extrémités sont reliées.

**18.** Procédé selon les revendications 4 et 15, dans lequel le temps de transit $t_B$ des impulsions à travers le corps lorsqu'il n'y a pas d'accélération, la variation du temps de transit $\delta t$ des impulsions due à l'accélération, la distance connue $S_B$, le rayon connu $R$ du tube principal et la sensibilité connue $K_v/K_m$ de l'appareil sont utilisés pour déterminer ladite accélération angulaire A conformément à l'équation suivante :

$$A = \frac{K_v}{K_m}\cdot\frac{S_B\cdot\delta t}{R\cdot t_B^2}$$

**19.** Procédé selon la revendication 15, dans lequel ledit milieu fluide est un gaz.

**20.** Procédé selon la revendication 15, dans lequel ledit milieu fluide est un liquide.

**21.** Appareil pour mesurer l'accélération d'un objet en mouvement, comportant :

- un corps (2) capable d'émettre les impulsions d'énergie devant être transportées par ledit objet afin de se déplacer avec lui ;
- un émetteur ($T_F$) d'impulsions en une première position (4) sur le corps (2) pour la transmission d'impulsions de ladite énergie dans un sens avant de ladite première position et une seconde position sur le corps (2) à une distance connue de ladite première position ;
- un détecteur ($D_F$) d'impulsion dans ladite seconde position (5) sur le corps (2) ;
- un système de mesure (15) destiné à mesurer le temps de transit d'impulsions de ladite première position à ladite seconde position ; et
- un processeur (10) destiné à commander ledit émetteur, commandé par ledit détecteur, et à utiliser ledit temps mesuré de transit ainsi que ladite distance connue entre lesdites première et seconde positions pour déterminer l'accélération du corps et ainsi de l'objet en mouvement.

**22.** Procédé selon la revendication 21, dans lequel ledit émetteur d'impulsions est un émetteur d'impulsions sonique.

**23.** Procédé selon la revendication 21, comportant en outre un moyen destiné à éliminer un facteur vitesse d'impulsions.

**24.** Procédé selon la revendication 23, dans lequel ledit moyen destiné à éliminer le facteur vitesse d'impulsions comprend un émetteur ($T_R$) d'impulsions à ladite seconde position sur le corps (2) pour transmettre des impulsions de sens inverse de cet émetteur à ladite première position, et un détecteur ($\Delta R$) d'impulsions dans ladite première position sur le corps (2) pour détecter lesdites impulsions de sens inverse, ledit système de mesure mesurant également les temps de transit desdites impulsions de sens inverse de ladite seconde position à ladite première position, et ledit processeur (10) étant également destiné à commander ledit émetteur émettant lesdites impulsions de sens inverse, qui est commandé par ledit détecteur détectant lesdites impulsions de sens inverse, et utilisant aussi lesdits temps mesurés de transit des impulsions de sens inverse pour déterminer l'accélération du corps et ainsi de l'objet en mouvement.

**25.** Procédé selon la revendication 21,

dans lequel ledit processeur (10) est apte à commander ledit émetteur d'impulsions de sens avant afin qu'il transmette une pluralité N desdites impulsions de sens avant successivement de ladite première position à ladite seconde position, chaque impulsion étant émise depuis ladite première position lors de la détection de l'impulsion précédente dans ladite seconde position ;

dans lequel ledit système de mesure (15) est apte à mesurer les temps totaux de transit desdites N impulsions de sens avant ; et

dans lequel ledit processeur (10) est apte à utiliser lesdits temps totaux mesurés de transit, ainsi que ladite distance connue entre lesdites première et seconde positions multipliée par N, pour déterminer l'accélération du corps et ainsi de l'objet en mouvement.

**26.** Procédé selon la revendication 24,

dans lequel ledit processeur (10) est apte à commander ledit émetteur de sens avant à transmettre une pluralité N desdites impulsions de sens avant successive-ment de ladite première position à ladite seconde position, chacune étant émise depuis ladite première position lors de la détection de l'impulsion de sens avant précédente dans ladite seconde position, et il commande aussi ledit émetteur de sens inverse pour qu'il transmette la même pluralité N desdites impulsions de sens inverse successivement de ladite seconde position à ladite première position, chacune étant émise depuis la seconde position lors de la détection de l'impulsion de sens inverse précédente dans ladite première position ;

dans lequel ledit système de mesure mesure les temps totaux de transit desdites N impulsions de sens avant, et les temps totaux de transit desdites N impulsions de sens inverse ; et

dans lequel ledit processeur (10) est apte à utiliser lesdits temps totaux de transit desdites impulsions de sens avant et lesdits temps totaux de transit desdites impulsions de sens inverse, ainsi que ladite distance connue entre lesdites première et seconde positions multipliée par N, pour déterminer l'accélération du corps et ainsi de l'objet en mouvement.

**27.** Appareil selon la revendication 21, dans lequel ledit circuit de mesure comprend un oscillateur (19) à haute fréquence générant des impulsions d'horloge, un compteur (15, 18) destiné à compter le nombre d'impulsions d'horloge produites pendant les temps respectifs de transit mesurés.

**28.** Appareil selon la revendication 21, dans lequel ledit processeur (10) est apte à déterminer l'accélération de l'objet en mouvement périodiquement pendant un intervalle de temps prédéterminé, et pour intégrer ladite accélération déterminée sur ledit intervalle de temps afin de déterminer la vitesse de l'objet en mouvement à la fin dudit intervalle de temps.

**29.** Appareil selon la revendication 28, dans lequel ledit processeur (10) est apte à intégrer ladite vitesse déterminée sur ledit intervalle de temps afin de déterminer le déplacement dudit objet en mouvement pendant ledit intervalle de temps prédéterminé.

**30.** Appareil selon la revendication 21, dans lequel ladite accélération devant être mesurée est une accélération linéaire de l'objet.

**31.** Appareil selon la revendication 30, dans lequel ledit corps capable d'émettre lesdites impulsions est un tube (104) de forme cylindrique rempli d'un milieu gazeux et scellé aux deux extrémités, ladite première position étant à une extrémité (111) dudit tube et ladite seconde position étant à l'extrémité opposée (112) dudit tube.

**32.** Appareil selon les revendications 23 et 31, dans lequel ledit processeur (10) est apte à utiliser les temps de transit des impulsions de sens avant et des impulsions de sens inverse, et ladite distance connue $S_B$, pour déterminer ladite accélération en :

additionnant les temps totaux de transit des impulsions de sens avant aux temps totaux de transit des impulsions de sens inverse pour produire une valeur $2t_B$ qui est égale au double du temps de transit $t_B$ de l'impulsion à travers le corps lorsqu'il n'y a pas d'accélération ; soustrayant les temps totaux de transit des impulsions de sens avant des temps totaux de transit des impulsions de sens inverse pour produire une valeur $2\delta t$ égale au double de la variation des temps de transit $\delta t$ des impulsions due à l'accélération ; et déterminant l'accélération linéaire a conformément à l'équation suivante :

$$a = \frac{2 S_B \delta t}{t_B (t_B + \delta t)^2}$$

**33.** Appareil selon la revendication 31, dans lequel ledit tube est rempli d'air.

**34.** Appareil selon la revendication 21, dans lequel ladite accélération devant être déterminée est une accélération angulaire.

**35.** Appareil selon la revendication 34, dans lequel ledit corps capable d'émettre les impulsions est un récipient formé d'un tube principal (104) rempli d'un milieu liquide et ayant des premier et second tubes courts (106, 108) réalisés d'une seule pièce avec ledit tube principal et faisant saillie de celui-ci, ladite première position étant dans ledit premier tube court et ladite seconde position étant dans ledit second tube court.

**36.** Appareil selon la revendication 35, dans lequel ledit tube principal (104) est sous la forme d'un anneau.

**37.** Appareil selon la revendication 35, dans lequel ledit tube principal est sous la forme d'une spirale dont les extrémités sont reliées.

**38.** Appareil selon les revendications 23 et 35, dans lequel ledit processeur (10) est apte à utiliser le temps de transit $t_B$ des impulsions à travers le corps lorsqu'il n'y a pas d'accélération, la variation du temps de transit $\delta t$ des impulsions due à l'accélération, ladite distance connue $S_B$, le rayon connu R du tube principal et la sensibilité connue $K_m/K_v$ pour déterminer ladite accélération angulaire A conformément à l'équation suivante :

$$A = \frac{K_v}{K_m} \cdot \frac{S_B \cdot \delta t}{R \cdot t_B^2}$$

39. Appareil selon la revendication 35, dans lequel ledit milieu fluide est un gaz.

40. Appareil selon la revendication 35, dans lequel ledit milieu fluide est un liquide.

FIG.1

FIG.2

FIG.3